# EUROPÄISCHE PATENTSCHRIFT

(11) **EP 3 194 906 B1**
(45) Veröffentlichungstag und Bekanntmachung des Hinweises auf die Patenterteilung: **09.06.2021**
(21) Anmeldenummer: 15753360.5
(22) Anmeldetag: 19.08.2015
(51) Int. Cl.: G01F 15/00, G01L 19/06, G01F 1/38, G01F 23/14

(54) **MEDIENBESTÄNDIGE MULTILAGENBESCHICHTUNG FÜR EIN MESSGERÄT DER PROZESSTECHNIK**
CHEMICALLY RESISTANT MULTILAYERED COATING FOR A MEASURING DEVICE USED IN PROCESS ENGINEERING
REVÊTEMENT MULTICOUCHE AYANT UNE RÉSISTANCE CHIMIQUE DESTINÉ À UN APPAREIL DE MESURE DE PROCESSUS

(30) Priorität: 19.09.2014 DE 102014113543
(43) Veröffentlichungstag der Anmeldung: 26.07.2017
(73) Patentinhaber: Endress+Hauser SE+Co. KG, 79689 Maulburg (DE)
(72) Erfinder: SULZER, Thomas, CH-4058 Basel (CH); SEEFELD, Peter, 87459 Pfronten (DE); LOPATIN, Sergej, 79540 Lörrach (DE); TOUZIN, Mike, 79585 Höllstein (DE); GETMAN, Igor, 79539 Lörrach (DE); FUNKEN, Dieter, 79539 Lörrach (DE)
(74) Vertreter: Andres, Angelika Maria
(86) Internationale Anmeldenummer: PCT/EP2015/069061
(87) Internationale Veröffentlichungsnummer: WO 2016/041727

(56) Entgegenhaltungen:
- EP-A1- 0 736 757
- WO-A1-01/66269
- DE-U1- 29 501 626
- US-A1- 2013 291 650

## Beschreibung

Die Erfindung betrifft eine medienbeständige Multilagenbeschichtung für zumindest eine Komponente eines Feldgerätes der Prozess- und/oder Automatisierungstechnik, welches zur Überwachung zumindest einer physikalischen oder chemischen Prozessgröße eines Mediums eingesetzt wird.

Die zu überwachende Prozessgröße kann beispielsweise gegeben sein durch den Füllstand eines Mediums in einem Behälter oder den Durchfluss eines Mediums durch ein Rohr, aber auch durch die Dichte, die Viskosität, den pH-Wert, den Druck, die Leitfähigkeit, die Kapazität oder die Temperatur. Auch optische Sensoren, wie Trübungs- oder Absorptionssensoren sind bekannt. Die verschiedenen zugrundeliegenden Messprinzipien sowie die grundsätzlichen Aufbauten und/oder Anordnungen sind aus einer Vielzahl von Veröffentlichungen bekannt. Entsprechende Feldgeräte werden von der Anmelderin in großer Vielfalt hergestellt und vertrieben.

Ein Feldgerät umfasst zumindest eine Sensoreinheit und eine Elektronikeinheit. Oftmals ist zumindest eine Komponente der Sensoreinheit zumindest zeitweise und teilweise medienberührend. Je nach Medium und/oder vorherrschenden Prozessbedingungen stellt dies unterschiedliche Anforderungen an die verwendeten Materialien, aus welchen die zumindest eine medienberührende Komponente gefertigt ist. Dies betrifft von den Prozessbedingungen her insbesondere hohe Prozessdrücke und/oder Prozesstemperaturen. In Bezug auf das jeweilige Medium stellt insbesondere Korrosion oftmals ein großes Problem dar. Aggressive Medien, insbesondere Säuren, greifen die jeweiligen medienberührenden Komponenten einer Sensoreinheit fortwährend an. Das bekannteste Beispiel ist diesbezüglich vermutlich das Auftreten von Rost. Durch das stetige Betreiben eines Feldgerätes in Berührung mit einem korrosionsanfälligen Medium, wie einer wässrigen Lösung, insbesondere eine Säure, verkürzt die Lebensdauer des Feldgerätes deutlich. Dies betrifft insbesondere die Chemie-, Pharma- und Lebensmittelindustrie.

Eine gängige Schutzmaßnahme gegen Korrosion ist gegeben durch das Aufbringen einer Beschichtung auf zumindest einen medienberührenden Teilbereich mindestens einer zumindest zeitweise medienberührenden Komponente mit einem geeigneten, medienbeständigen Material. Hierfür gibt es im Stand der Technik unterschiedliche Möglichkeiten mit spezifischen Vor- und Nachteilen. Es versteht sich von selbst, dass die folgende Auflistung der verschiedenen Beschichtungsmaterialien und Beschichtungsmethoden und/oder Herstellungsverfahren nicht abschließend ist, sondern nur einige für die vorliegende Anmeldung relevante Beispiele aufzeigt. Beispielsweise kann eine Metallbeschichtung verwendet werden, insbesondere aus einem Edelmetall wie Gold oder Platin. Die Aufbringung kann mittels eines galvanischen Abscheidungsprozesses, aber auch über das PVD (physical vapour deposition) Verfahren, insbesondere durch Sputtern, erfolgen. Die so erhaltenen jeweiligen Schichten bieten einen sehr guten Schutz gegen Korrosion. Allerdings gibt es auch einen erheblichen Nachteil: Edelmetallbeschichtungen führen nämlich leicht zu schwerer und schneller Korrosion anderer medien- oder prozessberührender Bauteile, wie beispielsweise einem Behälter für das Medium, sowie Rohrleitungen oder Armaturen. Letztere sind üblicherweise aus einem unedleren Metall oder eine Metalllegierung gefertigt, wie beispielsweise nichtrostender Stahl. Durch unterschiedliche Redoxpotentiale der unterschiedlichen Materialien kommt es zu einer Redoxreaktion, bei welcher der Behälter, die Rohrleitung oder eine Armatur korrodieren kann.

Eine alternative und gleichzeitig kostengünstige Beschichtung ist gegeben durch die Verwendung eines Kunststoffes, zum Beispiel PEEK, PTFE, PFA oder ECTFE. Hergestellt werden Kunststoffbeschichtungen beispielsweis durch Temper- und/oder Sinterprozesse und weisen eine exzellente chemische Beständigkeit, gute Antihafteigenschaften sowie eine hohe Temperaturbeständigkeit (bis zu 250°C) auf. Ferner sind viele Kunststoffbeschichtungen elastisch und bieten eine elektrische Isolation zwischen dem Medium und den medienberührenden Komponenten der Sensoreinheit. In der Lebensmittelindustrie sind beispielsweise modifizierte PFA Materialien weit verbreitet, wie zum Beispiel PFA Edlon SC-7005. Bei der Verwendung derartiger Beschichtungsmaterialien für Feldgeräte sind allerdings je nach Feldgerät und Messprinzip verschiedene Anforderungen zu erfüllen, welche die Anwendbarkeit und Effizienz teilweise stark beschränken. Diese Einschränkungen sind größtenteils durch die Beschaffenheit der Kunststoffbeschichtungen gegeben, welche sich aus größeren Molekülen zusammensetzen, und welche grundsätzlich in ihrer Struktur weniger dicht gepackt sind als andere Beschichtungsmaterialien, wie z. B. die bereits genannten Metalle. Kleinere Partikel oder Moleküle, insbesondere Wasser oder Säuremoleküle wie HF und HCl, können durch Kunststoffbeschichtungen entsprechend hindurch diffundieren. Die Diffusionsrate wird allerdings mit wachsender Schichtdicke deutlich reduziert, so dass ausreichend dicke Schichten einen ausreichend guten Korrosionsschutz bewirken. Allerdings gibt es für verschiedene Feldgeräte, wie beispielsweise Druckmesszellen, Druckmittler, Temperaturfühler usw., bedingt durch das jeweilige Messprinzip Grenzen für die Schichtdicke.

Im Falle einer Druckmesszelle werden eine Messzelle und ein hermetisches, hydraulisches System mit einer Membran abgeschlossen. Die Membran, welche in diesem Falle die zumindest zeitweise und teilweise medienberührende Komponente der Sensoreinheit darstellt, gibt dann jeweils den aktuellen Prozessdruck an die Messzelle weiter. Aufgrund dieser Funktionalität muss die Membran sehr flexibel und dünn sein (von 25µm bis 150 µm). Entsprechend schnell kann im Betrieb eine solche Membran korrodieren, weshalb ihre Lebensdauer der Druckmesszelle insbesondere in einem aggressiven Medium begrenzt ist. Eine erhöhte Lebensdauer wird üblicherweise durch das Aufbringen einer Beschichtung erreicht. Wie die Membran muss in diesem Fall jedoch die Beschichtung der Membran ebenfalls sehr dünn und flexibel sein, etwa 100-300µm. Nun ist es aber so, dass der Diffusionswiderstand für das Medium bei einer Kunststoffbeschichtung mit der Dicke der Schicht skaliert und die optimale Schichtdicke für eine ausreichend korrosionsbeständige Kunststoffbeschichtung im Prinzip um den Faktor 10 höher ist als die zulässige Dicke für die Beschichtung der Membranen von Druckmesszellen.

Eine weitere Alternative für Beschichtungen stellen sogenannte Hartstoffbeschichtungen dar. Hier sind insbesondere Siliziumcarbid (SiC), Diamant Like Carbon (DLC), oder auch Bornitrid (BN) zu nennen. Diese Materialien lassen sich zum Beispiel mittels des CVD (Chemical Vapour Deposition) Verfahrens abscheiden, insbesondere mittels des CVD-Verfahrens in Plasma unter Niederdruckbedingungen, welches auch unter der Bezeichnung plasmagestütztes CVD bekannt ist. Neben den Hartstoffen werden üblicherweise auch Tantal Beschichtungen mittels eines CVD-Prozesses gewachsen.

Beim CVD Verfahren werden die jeweiligen Materialien aus der Gasphase mittels einer chemischen Reaktion auf ein Substrat abgeschieden. Im einfachsten Falle werden bestimmte Substanzen, in welchen jene Elemente, aus welchen die erwünschte Beschichtung aufgebaut werden soll, vorhanden sind, in der Gasphase auf ein Substratmaterial geleitet. Dort reagieren sie dann chemisch zum Zielmaterial sowie gasförmigen Nebenprodukten. Die Energie, welche für die Reaktion auf dem Substratmaterial benötigt wird, wird dabei durch die Temperatur des Substrates, oder im Fall eines plasmagestützten CVD Prozesses zum Teil auch durch die Einkopplung des Plasmas zur Verfügung gestellt.

Eine SiC Schicht lässt sich beispielsweise aus einer Gasmischung aus Methan und Silan im Plasma gemäß folgendem Reaktionsschema wachsen:

SiH₄ + CH₄ →SiCHₓ + H₂.

Ähnlich kann eine DLC Schicht im Plasma abgeschieden werden:

CH₄→CHₓ + H₂.

In beiden Produkten gilt x<<1.

Das CVD Verfahren bietet eine hohe Flexibilität für die Eigenschaften der hergestellten Beschichtung. Beispielsweise kann während des Beschichtungsprozesses die Zusammensetzung des Gasgemisches kontinuierlich geändert werden. Eine SiC Schicht kann mit einer deutlich härteren DLC Schicht versiegelt werden, oder der oberste Bereich der Schicht oxidiert werden. Beide Maßnahmen führen zu einer größeren Oberflächenenergie der Beschichtung. Dies kann für verschiedene Anwendungen von Vorteil sein.

Die im Zusammenhang mit dem CVD-Verfahren genannten Beschichtungsmaterialien zeichnen sich durch hervorragende Korrosionsbeständigkeit aus, und aufgrund ihrer kompakten Struktur verhindern sie die Diffusion von Wasser- und/oder Säuremolekülen. Allerdings weisen auch diese Beschichtungen entscheidende Nachteile auf: Zum einen sind die entsprechenden Beschichtungen empfindlich und können schnell und leicht durch Schläge oder Kratzer beschädigt werden. Zum anderen sind aufgrund der Herstellung mittels des CVD Verfahrens typischerweise mikroskopische Defekte, sogenannte Mikroperforation oder Pin Holes, vorhanden. Im Falle von SiC liegt die Anzahl der Defekte beispielsweise in der Größenordnung von 10 pro cm². Obwohl diese Defekte normalerweise also keine hohe Dichte aufweisen, können durch die Defekte aggressive Moleküle zur Metalllegierung hin korrodieren, was die entsprechenden Beschichtungen wenig interessant für Daueranwendungen in aggressiven Medien macht. EP 0 736 757 offenbart ein Feldgerät gemäß dem Oberbegriff des Anspruchs 1.

Der vorliegenden Erfindung liegt die Aufgabe zugrunde, ein Feldgerät bereitzustellen, welches für einen dauerhaften Einsatz in aggressiven und/oder korrosionsauffälligen Medien, insbesondere auch bei hohen Temperaturen und/oder Drücken geeignet ist.

Diese Aufgabe wird erfindungsgemäß gelöst durch ein Feldgerät für die Prozess- und/oder Automatisierungstechnik zur Überwachung mindestens einer chemischen oder physikalischen Prozessgröße eines Mediums in einem zumindest teilweise und zeitweise medienführenden Bauteil umfassend zumindest eine Elektronikeinheit und eine Sensoreinheit, wobei zumindest eine Komponente der Sensoreinheit zumindest in einem Teilbereich und zumindest zeitweise medienberührend ist, wobei zumindest der medienberührende Teilbereich der Komponente mit einer medienbeständigen Multilagenbeschichtung aus zumindest zwei Schichten versehen ist, wobei eine erste Schicht aus einem Material besteht, welches aus einer dicht gepackten Atomanordnung aufgebaut ist, und welche erste Schicht einen Korrosionsschutz für das Medium bewirkt, wobei um die erste Schicht eine zweite Schicht angeordnet ist, welche aus einem chemisch beständigen Kunststoff besteht, und welche einen Schutz der ersten Schicht vor äußeren Beschädigungen und Korrosion bietet, wobei das Feldgerät eine Druckmesszelle ist, und wobei die zumindest in einem Teilbereich und zumindest teilweise medienberührende Komponente eine Membran ist, dadurch gekennzeichnet, dass die erste Schicht eine Dicke von etwa 10µm aufweist und elastisch ist, und die zweite Schicht eine Dicke von etwa 300 µm aufweist.

Eine erfindungsgemäße Multilagenbeschichtung ermöglicht es, die jeweiligen Nachteile der verschiedenen in der Einleitung beschriebenen bekannten Beschichtungsmaterialien und - methoden zu kompensieren und zeichnet sich insbesondere durch einen sehr guten Korrosionsschutz bereits bei vergleichsweise geringen Schichtdicken aus.

Die erste Schicht sorgt dabei für einen ausgezeichneten Korrosionsschutz bereits bei sehr geringen Schichtdicken, und entsprechend für eine sehr gute Diffusionssperre. Allerdings ist diese erste Schicht sehr empfindlich, insbesondere in Bezug auf mechanische Einwirkungen. Die zweite robustere Kunststoffschicht wirkt dann ebenfalls als effektiver Diffusionswiderstand und Korrosionsschutz, insbesondere in Bezug auf die in der ersten Schicht herstellungsbedingten Mikroperforationen oder Pin Holes. Vielmehr sorgt sie jedoch für einen Schutz der ersten Schicht vor äußeren Beschädigungen. Im Vergleich zu einer reinen Kunststoffbeschichtung kann die zweite Schicht im Verbindung mit einer erfindungsgemäßen Multilagenbeschichtung ebenfalls vergleichsweise dünn sein, da die erste Schicht bereits für einen ausreichenden Korrosionsschutz sorgt.

Zusammengenommen bewirken die beiden Schichten einen sehr guten Korrosionsschutz für die zumindest ein medienberührende Komponente der Sensoreinheit, der auch unter extremen Prozessbedingungen wie hohen Prozesstemperaturen und/oder Prozessdrücken zuverlässig ist. Das ist insbesondere bei solchen Feldgeräten von Vorteil, bei welchen die Beschichtung aufgrund der jeweiligen Konstruktion und dem jeweils angewendeten Messprinzip sehr dünn sein muss, wie zum Beispiel bei den bereits genannten Druckmesszellen.

Es ist von Vorteil, wenn die zweite Schicht aus PFA, PTFE, FEP, ECTFE, PEEK oder Gummi besteht.

Ebenso ist es von Vorteil, wenn die erste Schicht aus einem Metall, insbesondere Gold, Platin, Silber oder Tantal, oder aber aus einem Hartstoff, wie SiC, DLC, Al₂O₃, SiO₂ oder BN besteht. Es versteht sich jedoch von selbst, dass sowohl für die erste Schicht als auch für die zweite Schicht oder auch für weitere Schichten, auch andere Materialien verwendet werden können, welche ebenfalls unter die Erfindung fallen.

In einer bevorzugten Ausführung wird für die erste Schicht ein elastisches Material, insbesondere SiC oder DLC oder ein zweischichtiges System aus SiC und DLC verwendet. Diese Materialien lassen sich mittels des CVD Verfahrens in Plasma herstellen. Insbesondere für Druckmesszellen bietet dies Vorteile, da die Membran selbst elastisch ist, und eine elastische Beschichtung weniger Einfluss auf ihre Eigenschaften während der Messung des Prozessdrucks hat. Aber auch bei anderen Feldgeräten kann aus ähnlichen Gründen die Verwendung elastischer Materialien vorteilhaft sein.

In einer weiteren Ausführung ist die erste Schicht mittels eines galvanischen Abscheidungsprozesses hergestellt. Alternativ kann die erste Schicht aber auch mittels eines CVD Verfahrens, insbesondere mittels eines CVD Verfahrens im Plasma unter Niedertemperaturbedingungen hergestellt sein. Eine weitere Variante besteht darin, die erste Schicht mittels des Sol-Gel Verfahrens herzustellen, einem naßchemischen Verfahren, mit welchem dünne keramische Schichten abgeschieden werden können.

Auch in Bezug auf die Herstellungsverfahren der einzelnen Schichten versteht es sich von selbst, dass auch andere als die genannten Herstellungsverfahren möglich sind, welche ebenfalls unter die Erfindung fallen.

Es ist von Vorteil, wenn die Oberflächenenergie der ersten Schicht in dem Medium zugewandten Bereich insbesondere durch eine Oxidation oder eine Dopierung geeignet eingestellt, insbesondere maximiert ist. Auf diese Weise kann die Haftung der zweiten Schicht auf der ersten Schicht erhöht werden. Im Falle von SiC führt entweder eine Oxidation oder eine Versiegelung mit einer dünnen DLC Schicht zu einer Erhöhung der Oberflächenenergie.

Es ist ebenfalls von Vorteil, wenn die erste Schicht eine Hybridstruktur ist. Auf diese Weise kann die Schicht im der Sensoreinheit zugewandten Bereich und im der zweiten Schicht zugewandten Bereich jeweils optimal an die jeweiligen Materialien angepasst werden. Das betrifft sowohl eine Anpassung der Haftungseigenschaften, als auch der Oberflächenenergie im Speziellen.

Die Erfindung sowie ihre Vorteile werden anhand der nachfolgenden Figuren Fig. 1 bis Fig. 2 näher erläutert. Es zeigen
Fig. 1 eine schematische Zeichnung einer mit einer erfindungsgemäßen Multilagenbeschichtung beschichteten Oberfläche einer Komponente einer medienberührenden Sensoreinheit, und
Fig. 2 eine schematische Zeichnung einer erfindungsgemäß beschichteten Druckmesszelle in dreidimensionaler (a) und zweidimensionaler (b) Ansicht.

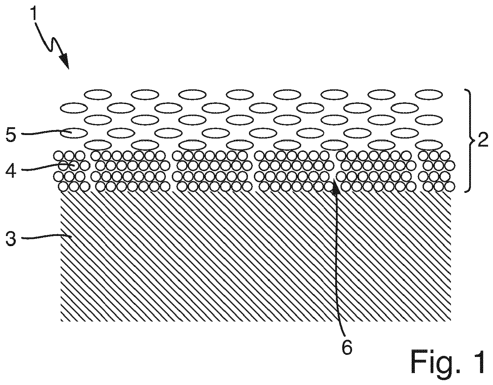

In Fig. 1 ist eine schematische Zeichnung einer mit einer erfindungsgemäßen Multilagenbeschichtung 2 beschichteten Oberfläche einer Komponente einer medienberührenden Sensoreinheit 1 gezeigt. Die Komponente 3 der medienberührenden Sensoreinheit ist der Einfachheit halber als Rechteck dargestellt. Die Multilagenbeschichtung 2 setzt sich aus einer ersten Schicht 4 und aus einer darüber angeordneten zweiten Schicht 5 zusammen.

Die erste Schicht kann, wie bereits erwähnt, entweder aus einem Metall, wie beispielsweise Gold, Platin, Silber oder Tantal, oder aber aus einem sogenannten Hartstoff, wie z. B. SiC, DLC, Al₂O₃, SiO₂ oder BN, bestehen. Je nach Anwendung sind unterschiedliche Materialien und entsprechend auch unterschiedliche Beschichtungsmethoden vorteilhaft, wie z. B. die galvanische Gasphasenabscheidung, die physikalische Gasphasenabscheidungsprozesse (PVD), oder auch das CVD-Verfahren. Die zugrundeliegenden Prinzipien sind aus einer Vielzahl von Veröffentlichungen bekannt und werden deshalb hier nicht weiter ausgeführt.

Insbesondere das CVD-Verfahren, bei welchem an einer üblicherweise erhitzten Oberfläche mittels einer chemischen Reaktion aus der Gasphase eine Feststoffkomponente abgeschieden wird, bietet den Vorteil einer konformen Schichtabscheidung. Somit ist das CVD Verfahren insbesondere bei komplexen dreidimensional geformten Oberflächen geeignet.

Einschränkungen für das Verfahren sind auf der anderen Seite dadurch gegeben, dass es nicht für jedes gewünschte Material eine gasförmige Verbindung gibt, aus der die entsprechende Schicht mittels des CVD Verfahrens hergestellt werden kann. Darüber hinaus muss das Substrat, also hier die mindestens eine medienberührende Komponente der Sensoreinheit, je nach angewendeter Methode dazu ausgelegt sein, hohe Temperaturen auszuhalten. Eine hohe Temperaturbelastung kann jedoch unter Umständen zu Verzug an der Sensorkomponente oder auch zu Diffusionsprozessen innerhalb der Sensoreinheit kommen.

Es gibt verschiedene Varianten des PVC Verfahrens, bei welchem die Temperaturbelastung des Substrats deutlich reduziert werden kann. Eine Möglichkeit besteht im plasmaunterstützten CVD, oder in der Niederdruck - plasmaunterstützten CVD. Dabei wird oberhalb des Substrats ein induktives oder kapazitives Plasma gezündet, welches das für die Beschichtung verwendete Gas anregt, zersetzt, und darüber hinaus für eine Erhöhung der Abscheiderate sorgen kann. Typische Substrattemperaturen für dieses Verfahren liegen im Bereich von ca. 200-500°C, während ohne ein unterstützendes Plasma teilweise Substrattemperaturen bis zu 1000°C erforderlich sind.

Ein weiterer Vorteil des CVD Verfahrens liegt darin, dass heterogene Beschichtungen hergestellt werden können. Verändert man beispielsweise während eines Abscheidevorgangs kontinuierlich das verwendete Gasgemisch, so ändert sich mit der Zeit auch kontinuierlich die Zusammensetzung der abgeschiedenen Schicht, wenn eine geeignete Zusammensetzung des Gasgemischs verwendet wird. So können hergestellte Schichten beispielsweise im Bereich ihrer Oberfläche oxidiert und/oder versiegelt werden. Insbesondere kann dadurch die Oberflächenenergie gezielt eingestellt werden.

Obwohl die so hergestellten Schichten sich durch eine dicht gepackte Struktur auszeichnen und eine außerordentliche Korrosionsbeständigkeit bereits bei sehr geringen Schichtdicken aufweisen, sind sie dennoch ungeeignet für den dauerhaften Einsatz in aggressiven Medien. Der Grund liegt in den bereits erwähnten mikroskopischen Defekten der Schichten 6, welche typisch für das CVD Verfahren sind. Beispiele sind in Fig. 1 eingezeichnet. Obwohl die Dichte der Defekte gering ist, können aggressive Moleküle die Schichten an entsprechenden Stellen durchdringen und die Metalllegierung korrodieren. Ein anderes bereits erwähntes Problem dieser Schichten besteht darin, dass sie sehr empfindlich sind und durch Kratzer und/oder Schläge leicht beschädigt werden können.

Deshalb ist erfindungsgemäß die erste Schicht 4 in Fig. 1 von einer zweiten Schicht 5 umgeben, welche aus einem chemisch beständigen Kunststoff besteht und welche die erste Schicht 4 vor äußeren Beschädigungen schützt. Für diese zweite Schicht 5 kann beispielsweise aus PFA, PTFE, FEP, ECTFE, PEEK oder Gummi verwendet werden. Auch hier ist die Aufzählung nicht abschließend und es versteht sich von selbst, dass auch andere Materialien unter die Erfindung fallen. Wie eingangs erwähnt, ist bei üblichen Schichtdicken der Diffusionswiderstand einer Kunststoffbeschichtung in der Regel geringer als bei einem Metall und/oder Hartstoff. Dennoch bietet die zweite Schicht 5 ebenfalls effektiv einen Widerstand für diffundierende Moleküle. Vielmehr aber ist sie wesentlich robuster als die erste Schicht 3 und sorgt entsprechend für einen Schutz der ersten Schicht 4 vor äußeren Beschädigungen.

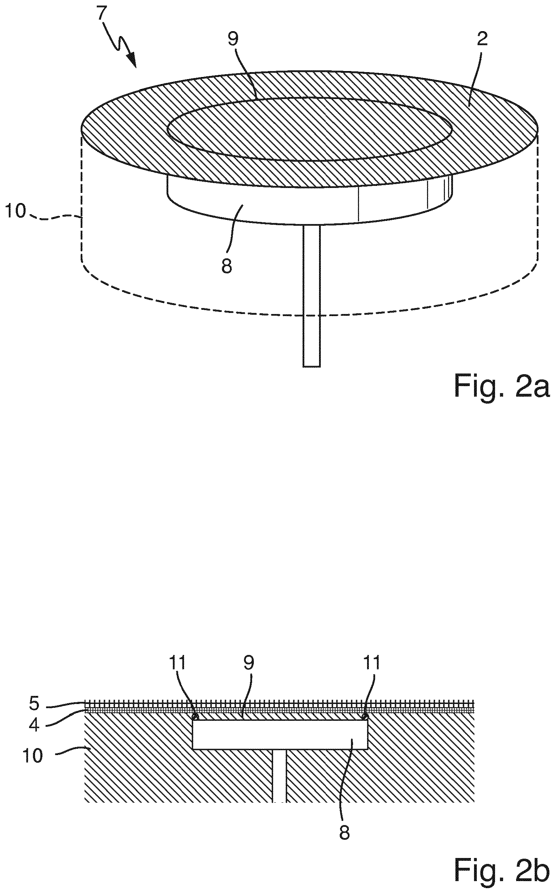

In Fig. 2a ist eine erfindungsgemäße Druckmesszelle 7 gezeigt. Entsprechende Feldgeräte werden ebenfalls von der Anmelderin in großer Vielfalt hergestellt und vertrieben und sind beispielsweise unter der Bezeichnung CERABAR und DELTABAR erhältlich. Eine Messzelle und ein hermetisches, hydraulisches System 8 werden mit einer Membran 9 abgeschlossen. Die Membran 9 ist im vorliegenden Beispiel aus einer Edelstahlfolie gefertigt. Es versteht sich jedoch von selbst, dass auch andere Materialien unter die vorliegende Erfindung fallen, wie zum Beispiel Monel. Die Membran ist üblicherweise über eine Schweißnaht 11 (s. Fig. 2b) mit einem Flansch 10 verbunden, in welchem die Kammer mit einer Transmissionsflüssigkeit 8 integriert ist. Während des Betriebs der Druckmesszelle 7 gibt die Membran 9 jeweils den aktuellen Prozessdruck an die Messzelle über die Transmissionsflüssigkeit in der Kammer 8 weiter. Aufgrund dieser Funktionalität muss die Membran 9 sehr flexibel und dünn sein (typischerweise von 25µm bis 150 µm).

Grundsätzlich hat Korrosion für Druckmesszellen zwei Konsequenzen. Zum einen kann die Membran 9 abkorrodieren, so dass Medium von der Transmissionsflüssigkeit der Druckmesszelle 7 verunreinigt wird und Medium ins Innere der Druckmesszelle 7 eindringt. Auf der anderen Seite können die Membran 9 und der Behälter für das jeweilige Medium ein galvanisches Element bilden. Deswegen ist die Membran 9 zum Schutz vor aggressiven Medien oftmals mit einer Beschichtung 2 versehen.

Wie die Membran 9 selbst, muss auch eine Beschichtung der Membran 2 dünn und flexibel sein, da sonst die Messperformance der Druckmesszelle eingeschränkt werden kann. Deshalb ist eine erfindungsgemäße Multilagenbeschichtung 2 vorteilhaft. Diese wird besser sichtbar in der zweidimensionalen Ansicht der Druckmesszelle in Fig. 2b. Dort ist schematisch eine erste Schicht 4 und eine zweite Schicht 5 dargestellt.

Für die erste Schicht 4 ist je nach Material eine Schichtdicke von ca. 10 µm bereits ausreichend. Die zweite Schicht 5 aus Kunststoff kann beispielsweise mit einer Schichtdicke von ca. 300 µm aufgetragen werden. Die Gesamtdicke ist so gegenüber einer reinen elastischen Kunststoffbeschichtung mit ausreichendem Korrosionsschutz deutlich reduziert. Es ist, insbesondere bei einer Druckmesszelle 7, von Vorteil, wenn auch für die erste Schicht ein elastisches Material, insbesondere

SiC oder auch DLC, gewählt wird. Somit wird die Flexibilität und Elastizität der Membran 7 so wenig wie möglich eingeschränkt.

## Patentansprüche

1. Feldgerät (7,12) für die Prozess- und/oder Automatisierungstechnik zur Überwachung mindestens einer chemischen oder physikalischen Prozessgröße eines Mediums (16) in einem zumindest teilweise und zeitweise medienführenden Bauteil (17) umfassend zumindest eine Elektronikeinheit (14) und eine Sensoreinheit (15), wobei zumindest eine Komponente (3) der Sensoreinheit zumindest in einem Teilbereich und zumindest zeitweise medienberührend ist,
wobei zumindest der medienberührende Teilbereich der Komponente (3) mit einer medienbeständigen Multilagenbeschichtung (2) aus zumindest zwei Schichten versehen ist,
wobei eine erste Schicht (4) aus einem Material besteht, welches aus einer dicht gepackten Atomanordnung aufgebaut ist, und welche erste Schicht einen Korrosionsschutz für das Medium bewirkt,
wobei um die erste Schicht (4) eine zweite Schicht (5) angeordnet ist, welche aus einem chemisch beständigen Kunststoff besteht, und welche einen Schutz der ersten Schicht vor äußeren Beschädigungen und Korrosion bietet, wobei das Feldgerät eine Druckmesszelle (7) ist, und wobei die zumindest in einem Teilbereich und zumindest teilweise medienberührende Komponente (3) eine Membran (9) ist **dadurch gekennzeichnet, dass**
die erste Schicht eine Dicke von etwa 10µm aufweist und elastisch ist, und die zweite Schicht eine Dicke von etwa 300 µm aufweist.

2. Feldgerät nach Anspruch 1,
wobei die zweite Schicht (5) aus PFA, PTFE, FEP, ECTFE, PEEK oder Gummi besteht.

3. Feldgerät nach Anspruch 1 oder 2,
wobei die erste Schicht (4) aus einem Metall, insbesondere Gold, Platin, Silber oder Tantal, SiC, DLC, Al₂O₃, SiO₂ oder BN besteht.

4. Feldgerät nach einem der vorhergehenden Ansprüche,
wobei für die erste Schicht (4) ein elastisches Material, insbesondere SiC oder DLC oder ein zweischichtiges System aus SiC und DLC verwendet wird.

5. Feldgerät nach einem der vorhergehenden Ansprüche,
wobei die erste Schicht (4) mittels eines galvanischen Abscheidungsprozesses hergestellt ist.

6. Feldgerät nach einem der vorhergehenden Ansprüche,
wobei die erste Schicht (4) mittels eines CVD Verfahrens, insbesondere mittels eines CVD Verfahrens im Plasma unter Niedertemperaturbedingungen hergestellt ist.

7. Feldgerät nach einem der vorhergehenden Ansprüche,
wobei die erste Schicht (4) mittels eines Sol-Gel Verfahrens hergestellt ist.

8. Feldgerät nach Anspruch 7,
wobei die Oberflächenenergie der ersten Schicht (4) in dem Medium zugewandten Bereich insbesondere durch eine Oxidation oder eine Dopierung geeignet eingestellt, insbesondere maximiert ist.

9. Feldgerät nach Anspruch 8,
wobei die erste Schicht (4) eine Hybridstruktur ist.

## Claims

1. Field device (7, 2) for process and/or automation engineering to monitor at least a chemical or physical process variable of a medium (16) in a component (17) which conducts medium at least partially and temporarily,
said field device comprising at least an electronics unit (14) and a sensor unit (15), wherein at least a component (3) of the sensor unit is in contact with the medium at least in a partial area and at least temporarily,
wherein at least the partial area of the component (3) that is in contact with the medium is provided with a medium-resistant multi-layer coating (2), said coating comprising at least two layers,
wherein a first layer (4) is made from a material which is make from a densely packed atomic arrangement, and wherein said first layer provides a corrosion protection for the medium
wherein a second layer (5) is arranged around the first layer (4), said second layer consisting of a chemically resistant plastic and which offers a protection for the first layer against external damage and corrosion, wherein the field device is a pressure measuring cell (7), and wherein the component (3) which is in contact with the medium at least in a partial area and at least partially is a membrane (9), **characterized in that**
the first layer has a thickness of approximately 10 µm and is elastic, and the second layer has a thickness of approximately 300 µm.

2. Field device as claimed in Claim 1,
wherein the second layer (5) is made from PFA, PTFE, FEP, ECTFE, PEEK or rubber.

3. Field device as claimed in Claim 1 or 2,
wherein the first layer (4) is made from a metal, particularly gold, platinum, silver or tantalum, SiC, DLC, Al₂O₃, SiO₂ or BN.

4. Field device as claimed in one of the previous claims,
wherein an elastic material, particularly SiC or DLC or a two-layer system made of SiC and DLC, is used for the first layer (4).

5. Field device as claimed in one of the previous claims,
wherein the first layer (4) is produced by means of a galvanic deposition process.

6. Field device as claimed in one of the previous claims,
wherein the first layer (4) is produced by means of a CVD process, particularly by means of a CVD process in plasma under low-temperature conditions.

7. Field device as claimed in one of the previous claims,
wherein the first layer (4) is produced by means of a sol-gel process.

8. Field device as claimed in Claim 7,
wherein the surface energy of the first layer (4) in the area facing towards the medium is appropriately regulated, particularly maximized, by an oxidation or doping.

9. Field device as claimed in Claim 8,
wherein the first layer (4) is a hybrid structure.

## Revendications

1. Appareil de terrain (7, 2) pour la technique des process et/ou d'automatisation, destiné à la surveillance d'au moins une grandeur de process chimique ou physique d'un produit (16) dans un composant (17) qui est au moins partiellement et temporairement en contact avec le produit,
lequel appareil de terrain comprend au moins une unité électronique (14) et une unité de capteur (1 5), au moins un composant (3) de l'unité de capteur étant en contact avec le produit au moins dans une zone partielle et au moins temporairement,
au moins la zone partielle du composant (3) qui est en contact avec le produit étant pourvue d'un revêtement multicouche résistant au produit (2), lequel revêtement comprend au moins deux couches,
une première couche (4) étant constituée d'un matériau qui est composé d'un arrangement atomique densément tassé, et laquelle première couche fournit une protection contre la corrosion pour le produit
une deuxième couche (5) étant disposée autour de la première couche (4), laquelle deuxième est constituée d'un plastique chimiquement résistant et qui fournit une protection de la première couche contre les dommages externes et la corrosion, l'appareil de terrain étant une cellule de mesure de pression (7), et le composant (3) étant une membrane (9) au moins dans une zone partielle et au moins partiellement en contact avec le produit,
**caractérisé en ce que**
la première couche présente une épaisseur d'environ 10 µm et est élastique, et la deuxième couche présente une épaisseur d'environ 300 µm.

2. Appareil de terrain selon la revendication 1,
pour lequel la deuxième couche (5) est constituée de PFA, PTFE, FEP, ECTFE, PEEK ou de caoutchouc.

3. Appareil de terrain selon la revendication 1 ou 2,
pour lequel la première couche (4) est constituée d'un métal, notamment de l'or, du platine, de l'argent ou du tantale, SiC, DLC, Al₂O₃, SiO₂ ou BN.

4. Appareil de terrain selon l'une des revendications précédentes,
pour lequel un matériau élastique, notamment SiC ou DLC ou un système à deux couches SiC et DLC, est utilisé pour la première couche (4).

5. Appareil de terrain selon l'une des revendications précédentes,
pour lequel la première couche (4) est produite au moyen d'un procédé de dépôt électrolytique.

6. Appareil de terrain selon l'une des revendications précédentes,
pour lequel la première couche (4) est produite au moyen d'un procédé CVD, notamment au moyen d'un procédé CVD dans un plasma dans des conditions de basse température.

7. Appareil de terrain selon l'une des revendications précédentes,
pour lequel la première couche (4) est réalisée au moyen d'un procédé sol-gel.

8. Appareil de terrain selon la revendication 7,
pour lequel l'énergie de surface de la première couche (4) dans la zone tournée vers le produit est réglée de manière appropriée, notamment maximisée, par une oxydation ou un dopage.

9. Appareil de terrain selon la revendication 8,
pour lequel la première couche (4) est une structure hybride.
